(19) Europäisches Patentamt
European Patent Office
Office européen des brevets

(11) **EP 2 879 372 A1**

(12) **EUROPEAN PATENT APPLICATION**

(43) Date of publication:
**03.06.2015 Bulletin 2015/23**

(51) Int Cl.:
*H04N 5/232* (2006.01)  *G06T 5/50* (2006.01)
*H04N 13/02* (2006.01)  *G02B 27/22* (2006.01)
*H04N 13/00* (2006.01)

(21) Application number: **13306635.7**

(22) Date of filing: **29.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Sabater, Neus**
**35576 Cesson Sevigne Cedex (FR)**

• **Drazic, Valter**
**35576 Cesson Sevigne Cedex (FR)**
• **Sandri, Gustavo**
**35576 Cesson Sevigne Cedex (FR)**

(74) Representative: **Huchet, Anne**
**Technicolor**
**1, rue Jeanne d'Arc**
**92443 Issy-les-Moulineaux Cedex (FR)**

(54) **Method and device for processing a raw image acquired with a plenoptic camera**

(57) The invention is related to a method and device for processing a raw image (2) acquired with a plenoptic camera comprising a photosensor array optically associated with a lenslet array, the raw image (2) representing a scene. To avoid inter-view crosstalk, the method comprises the steps of demultiplexing the raw image (2) to obtain a plurality of intermediary images (61, 62) each representing a view of the scene according to a different point of view, and demosaicing at least one first intermediary image (61) of the plurality of intermediary images to obtain at least one first final image of the scene, the demultiplexing being performed before the demosaicing.

Fig 4

**Description**

**1. Domain of the invention.**

The invention relates to the domain of plenoptic camera and more specifically to the processing of a raw image acquired with a plenoptic camera. The invention is also understood in the context of disparity estimation.

**2. Prior art**

According to the prior art, it is known to acquire different views of a same scene in a single snapshot with a plenoptic camera, also called light-field camera. As to generate the different images representing the different views of the scene, the raw image acquired with the plenoptic camera is first demosaiced, and then demultiplexed. The demosaicing enables to recover a full color raw image, i.e. to recover full color information (for example RGB information, RGB standing for "Red", "Green" and "Blue") for the pixels of the raw image while the raw image acquired with the plenoptic image associates only one color component (R, G or B for example) with each pixel. Demosaicing (also called demosaicking) process if for example described in "Image demosaicing: a systematic survey" by Li, Gunturk and Zhang, Proc. SPIE, vol. 6822, p. 68221J (2008). The demultiplexing performed after the demosaicing enables to recover the different views of the scene, i.e. to group the pixels of the demosaiced raw image according to the view they belong to.
The demosaicing and demultiplexing steps may lead to view-crosstalk artifacts, i.e. color information coming from one of the different views ends up in another view, leading to visible artifacts when rendering the different views of the scene.

**3. Summary of the invention**

The purpose of the invention is to overcome at least one of these disadvantages of the prior art.
More specifically, the purpose of the invention is to avoid interview crosstalk when generating images of a scene acquired with a plenoptic camera.
The invention relates to a method of processing a raw image acquired with a plenoptic camera comprising a photosensor array optically associated with a lenslet array, the raw image representing a scene. The method comprises the following steps:

- demultiplexing the raw image to obtain a plurality of intermediary images each representing a view of the scene according to a different point of view,
- demosaicing at least one first intermediary image of the plurality of intermediary images to obtain at least one first final image of the scene,

the demultiplexing being performed before the demosaicing.
According to a particular characteristic, the raw image is formed with a matrix of pixels, a plurality of color components being associated with the pixels of the raw image in such a way that each single color component of the plurality of color components is associated with a different first pixel of the raw image according to a predetermined pattern, each intermediary image comprising pixels selected among the pixels of the raw image.
Advantageously, the demosaicing comprises the steps of, for at least one first pixel of said at least one first intermediary image:

- determining at least one second pixel, in at least one second intermediary image of the plurality of intermediary images different from the at least one first intermediary image, corresponding to the at least one first pixel based on disparity information associated with the at least one first pixel,
- determining the color component associated with the at least one second pixel,
- if the color component associated with the at least one second pixel is different from the color component associated with the at least one first pixel, then further associating the color component associated with the at least one second pixel with the at least one first pixel.

According to a specific characteristic, the associating of the color component with the at least one first pixel is performed only if a confidence level associated with the disparity information associated with the at least one first pixel is greater than a predetermined threshold value.
Advantageously, the method further comprises computing a first disparity map associated with the at least one first intermediary image.
According to another characteristic, the method further comprises refining the first disparity map to obtain a second disparity map to be associated with the at least one first final image, the refining being based on color information associated with pixels of the at least one first final image.

Advantageously, the method further comprises refining the at least one first final image to obtain at least one second final image, the refining being based on disparity information comprised in the second disparity map.

According to a particular characteristic, the method further comprises refining the second disparity map and refining the second final image, the refining of the second disparity map and of the second final image are repeated until convergence.

The invention also relates to a device configured for processing a raw image acquired with a plenoptic camera comprising a photosensor array optically associated with a lenslet array, the first image representing a scene. The device comprises at least one processor configured for:

- demultiplexing the raw image to obtain a plurality of intermediary images each representing a view of the scene according to a different point of view,
- demosaicing at least one first intermediary image of the plurality of intermediary images to obtain at least one first final image of the scene,

the demultiplexing being performed before the demosaicing.

Advantageously, the at least one processor is further configured for, for at least one first pixel of said at least one first intermediary image:

- determining at least one second pixel, in at least one second intermediary image of the plurality of intermediary images different from the at least one first intermediary image, corresponding to the at least one first pixel based on disparity information associated with the at least one first pixel,
- determining the color component associated with the at least one second pixel,
- if the color component associated with the at least one second pixel is different from the color component associated with the at least one first pixel, then further associating the color component associated with the at least one second pixel with the at least one first pixel.

According to another characteristic, the at least one processor is further configured for determining a confidence level associated with the disparity information associated with the at least one first pixel.

Advantageously, the at least one processor is further configured for computing a first disparity map associated with the at least one first intermediary image.

According to a specific characteristic, the at least one processor is further configured for refining the first disparity map to obtain a second disparity map to be associated with the at least one first final image, the refining being based on color information associated with pixels of the at least one first final image.

According to another characteristic, the at least one processor is further configured for refining the at least one first final image to obtain at least one second final image, the refining being based on disparity information comprised in the second disparity map.

The invention also relates to a computer program product comprising instructions of program code for executing steps of the method of processing a raw image acquired with a plenoptic camera, when the program is executed on a computing device.

## 4. List of figures

The invention will be better understood, and other specific features and advantages will emerge upon reading the following description, the description making reference to the annexed drawings wherein:

- figure 1 shows a plenoptic camera, according to a particular embodiment of the invention;
- figure 2 shows a raw image acquired with the plenoptic camera of figure 1, according to a particular embodiment of the invention;
- figure 3 shows a method of processing the raw image of figure 2, according to a first particular embodiment of the invention;
- figure 4 shows a method of processing the raw image of figure 2, according to a second particular embodiment of the invention;
- figure 5 shows an intermediary image resulting from the demultiplexing of the raw image of figure 2, according to a particular embodiment of the invention;
- figure 6 shows the demosaicing of the raw image of figure 2, according to a particular embodiment of the invention;
- figure 7 diagrammatically shows a device implementing a method of processing the raw image of figure 2, according to a particular embodiment of the invention.

## 5. Detailed description of embodiments of the invention.

The invention will be described in reference to a particular embodiment of the processing of a raw image to obtain one or several images of a scene. The plenoptic camera comprises a photosensor array optically associated with a lenslet array to acquire the raw image of the scene. To obtain at least one final image of the scene, the raw image is first demultiplexed then demosaiced. The demultiplexing of the raw image generates a plurality of intermediary images each representing a specific view of the scene according to a different point of view. The demultiplexing is then followed by a demosaicing of one, several or all the intermediary images to generate one or several final images of the scene, each final image corresponding to a full-color view of the scene according to a different point of view.

Performing the demultiplexing before the demosaicing enables to solve the issues of the prior art, i.e. specifically enables to avoid inter-view crosstalk artefacts.

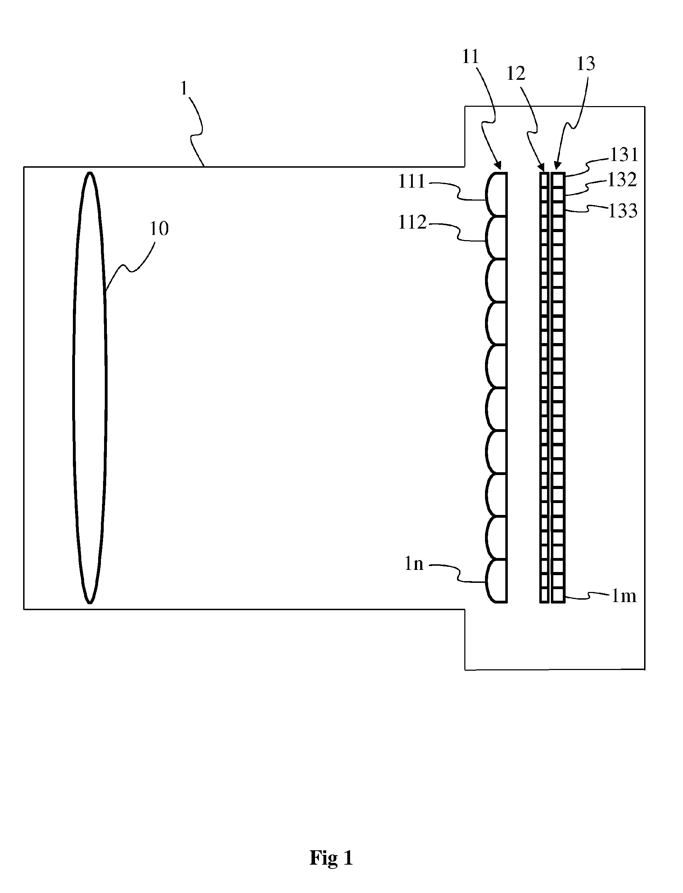

**Figure 1** illustrates a plenoptic camera 1, according to a particular and non-limitative embodiment of the invention. The plenoptic camera 1 is composed of a lens arrangement associated with a photosensor array 13, also called image sensor array 13. The photosensor array 13 comprises a large number m of photosensors 131, 132, 133 to 1 m arranged in the form of a matrix of X columns and Y lines, m corresponding to X time Y. Each photosensor corresponds to a pixel of the raw image of the scene acquired with the photosensor array, each pixel covering a part (also called a point) of the scene. For purposes of illustration, the photosensor array 13 is shown with a relative small number of photosensors 131 to 1m. Naturally, the number of photosensors is not limited to the illustration of figure 1 but extends to any number of photosensors, for example several thousand or several millions of photosensors, for example 12.4 megapixels, a pixel corresponding to a photosensor (e.g., corresponding to an array or matrix of 4088x3040 pixels/photosensors). Each photosensor of the plurality of photosensors optically associated with one single microlens enables to acquire raw data representative of a pixel of the scene according to one view angle. A color filter array (CFA) 12 is arranged on the photosensor array 13. The CFA 12 typically arranges RGB (Red, Green and Blue) color filters on the photosensor array, the RGB arrangement taking for the example the form of a Bayer filter mosaic. One color filter (red, green or blue filter) is advantageously associated with one photosensor according to a predetermined pattern, which comprises 50 % green, 25 % red and 25 % blue in the example of a Bayer filter, such a pattern being also called RGBG, GRGB or RGGB pattern. The lens arrangement comprises a primary lens 10, also called main lens, and a lenslet array 11, which comprises a plurality of n microlenses 111, 112, 1 n, n being a positive integer greater than or equal to 2. The microlenses 111, 112, 1n are arranged in such a way as to be optically each associated with a plurality of photosensors. An optical association of a microlens with photosensors means that the light rays passing through a given microlens reach at least one of the photosensors optically associated with this given microlens. The number of photosensors optically associated with one microlens corresponds to the number of views of the scene acquired with the plenoptic camera 1. For purposes of illustration, the lenslet array 11 is shown with a relative small number of microlenses, but the number of microlenses may extend up to several thousand or even one or several million of microlenses. To obtain the different views, the raw image (i.e. the color sensor data acquired with the photosensor array 13) is de-multiplexed then demosaiced. After the demosaicing step, RGB image data values are obtained at each pixel location for each view.

A gap is advantageously formed between the lenslet array 11 and the set color filter array 12 / photosensor array 13. The gap may be composed of air, of an optical material having an index n (for example a glass layer) or of multiple layers comprising at least one layer air layer and at least one optical material layer. Using a glass layer to form the gap has the advantages of keeping the lenslet array at a same distance from the photosensor array in each and every location and of reducing this distance when needed. If d is the distance between the output of the lenslet array and the photosensor array according to a longitudinal axis, having a layer composed of an optical material with an index n (n > 1, for example n = 1.5) between the lenslet array and the photosensor array enables to set the distance to d/n without modifying d. By adapting/modifying the index of the optical material of the layer forming the gap, it is possible to adapt/modify a parameter representative of the distance between the lenslet array and the photosensor array without modifying the distance d. According to an embodiment, the lenslet array 11 is placed and adjusted to be approximately at one focal length f (i.e. the focal ± 5 %) from the photosensor array 13, where f is the focal length of the microlenses. The lenslet array 11 is focused at the image plane of the primary lens 10 and the microlenses of the lenslet array 11 are focused at infinity. According to another embodiment, in order to increase or maximize spatial resolution, i.e. to achieve sharper, higher spatial resolution of microlens images, the microlenses are focused on the image created by the primary lens inside the plenoptic optical lens of the plenoptic camera 1 and in front of the lenslet array 11 (i.e. between the lenslet array 11 and the primary lens 10), instead of being focused on the primary lens itself. According to this embodiment, the lenslet array 11 may be located at distances greater than f or less than f from the photosensor array 13. For example, the lenslet array 11 may be placed at distance 4/3 f from the photosensor array 13, or at other distances that are multiple of f, e.g. 0.5 f, 1.5f or ¾ f.

Naturally, the arrangement of the color filters on the photosensor array 13 is not limited to a RGGB pattern.

According to variants, the predetermined pattern may be a RGBE pattern with one of the green filters modified to 'Emerald' (for a block of four color filters); a CYYM pattern with one 'Cyan' filter, two 'Yellow' filters and one 'Magenta' filter (for a block of four color filters); a CYGM pattern with one 'Cyan' filter, one 'Yellow' filter, one 'Green' filter and one 'Magenta' filter; a RGBW pattern with one 'Red' filter, one 'Green' filter, one 'Blue' filter and one 'White' filter, several arrangement being possible (for example arranged on a block of four color filters with 'White' for the upper left filter, 'Red' for the upper right filter, 'Blue' for the lower left filter and 'Green' for the lower right filter; or arranged on a block of 4x4 color filters with 'White', 'Blue', 'White', 'Green' for the first line, 'Blue', 'White', 'Green', 'White' for the second line below the first line, 'White', 'Green', 'White', 'Red' for the third line below the second line and 'Green', 'White', 'Red', 'White' for the fourth line below the third line).

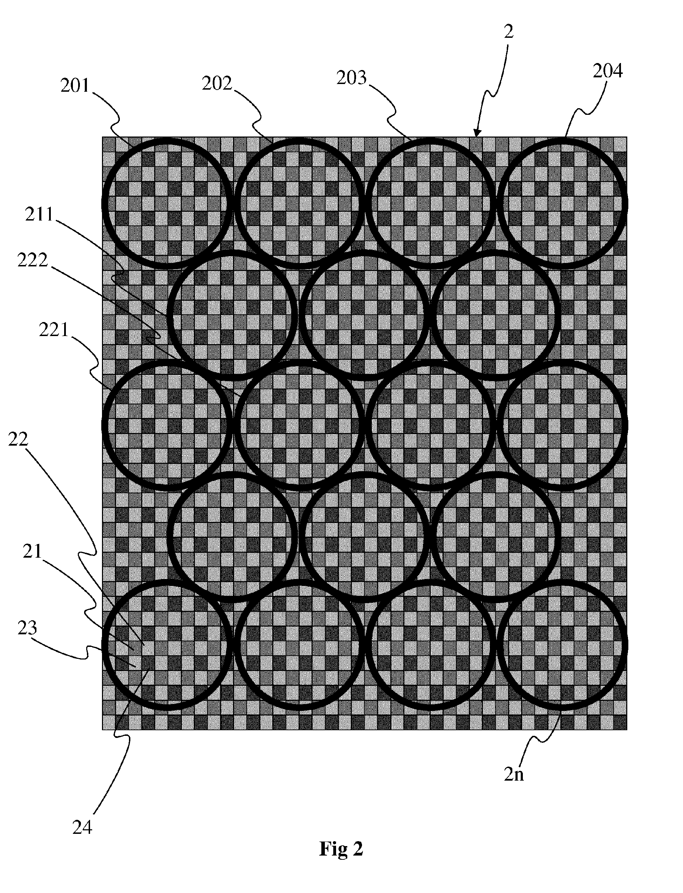

**Figure 2** illustrates a raw image 2 acquired with the plenoptic camera 1 according to a particular and non-limitative embodiment of the invention. The raw image 2 is formed with a matrix of pixels, the number of pixels corresponding to the number of photosensors of the photosensor array used for acquiring the raw image 2. One single color component is associated with each pixel of the image. In the non limitative example of figure 2, the single color component associated with each pixel is either R, G or B (Red, Green or Blue). The single color component associated with a given pixel of the raw image depends from the color filter associated with the photosensor used for acquiring the amount of light reaching the photosensor. The amount of light is expressed with a value representative of a level, coding for example with 8 bits (the value associated with the pixel being comprised between 0 and 255) or 10 bits (the value being comprised between 0 and 1023) or more. The value representing the amount of light reaching a photosensor associated with a color filter is associated with the pixel of the raw image corresponding to the photosensor and represents the level of the color component (corresponding to the color filter) associated with the pixel. The color pattern illustrated on figure 2 is RGGB (Red, Green, Green, Blue), i.e. for a block of 4 pixels 21 to 24 arranged in two lines and two columns, the upper left pixel 21 is associated with the Red color component, the upper right pixel 22 is associated with the Green color component, the lower left pixel 23 is associated with the Green color component and the lower tight pixel 24 is associated with the Blue color component. Naturally, the color pattern is dependent from the arrangement of the color filters of the CFA and may be different than the one described hereinabove. A set of microlenses 201, 202, 203, 204, 211, 221 and 2n is illustrated on figure 2. Each microlens 201 to 2n is optically associated with a plurality of pixels of the raw image, which correspond to the corresponding photosensors of the photosensor array optically associated with the microlenses of the lenslet array. Each microlens 201 to 2n has a circular form, all microlenses 201 to 2n advantageously having the same radius. As to optimize the coverage of the photosensors array by the lenslet array, the microlenses 201 to 2n are advantageously arranged in a quincunx arrangement, thus reducing the number of photosensors not optically associated with a microlens. The same number of pixels (or photosensors) is associated with each microlens, for example it may be comprised for example between 2 pixels (or photosensors) and up to several dozens or even one or several hundred of pixels (or photosensors). The number of pixels (or photosensors) optically associated with a microlens is not limited to an integer either but also extends to non integer numbers, for example $X + \frac{1}{2}$ or $X + 1/3$, where X is an integer number.

The form of the microlenses is not limited to a circle either. Microlenses may also take the form of a square, a rectangle, a hexagon or any other form.

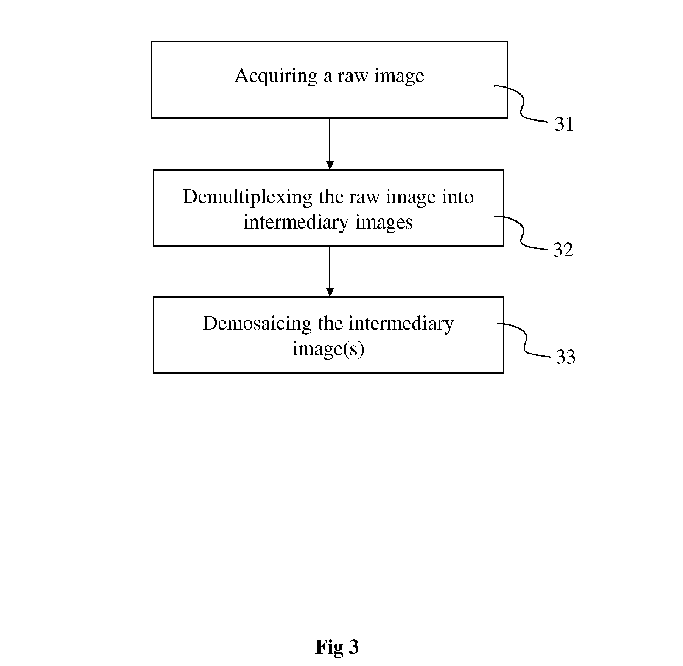

**Figure 3** illustrates a method of processing the raw image 2, according to a first particular and non-limitative embodiment of the invention.

During a first step 31, the image raw is acquired by the plenoptic camera when shooting a scene, each photosensor of the photosensor array measuring the amount of light reaching it during a predetermined amount of time. This measure is advantageously encoded on 8, 9, 10 or more bits and associated with the pixel of the raw image corresponding to the photosensor. As one single color filter (for example Red, Green or Blue) is associated with each photosensor, the value representative of the luminance associated with a pixel also represents the level of the color component associated with the pixel of the raw image, the color component associated with the pixel corresponding to the color of the color filter associated with the corresponding photosensor.

Then during a step 32, the raw image is demultiplexed to obtain two or more intermediary images, which each represent a view of the scene according to a different point of view. The number of intermediary images advantageously corresponds to the number of photosensors optically associated with one microlens of the lenslet array. The demultiplexing enables to reconstruct the intermediary images by selecting one pixel in each set of pixels optically associated with one microlens. As the pixels of the intermediary images correspond to pixels selected within the raw image, at best one single color component (among the color components corresponding to the color filters of the CFA of the plenoptic camera used for acquiring the raw image) is associated with each pixel of each intermediary image.

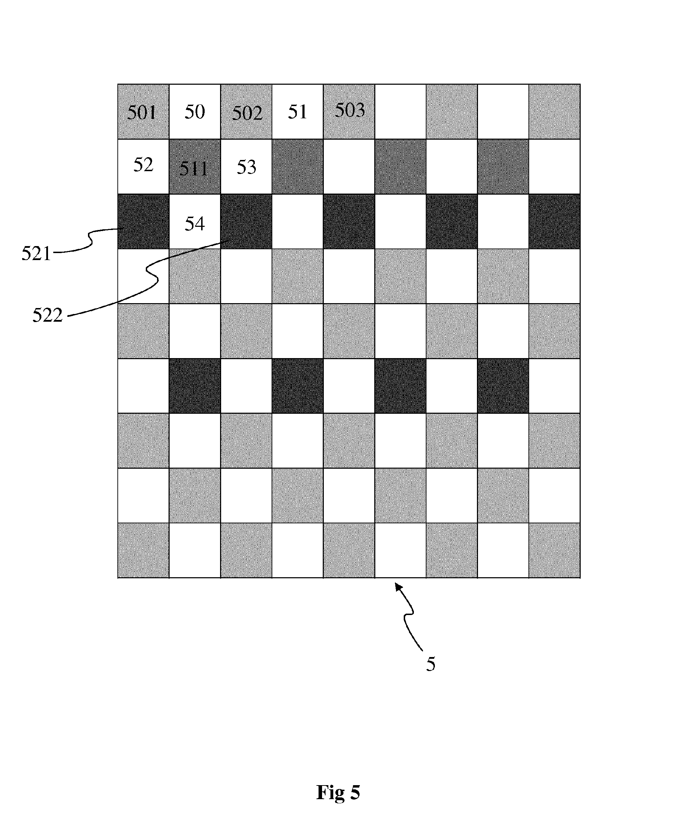

An example of one intermediary image 5 resulting from the raw image 2 is illustrated on **figure 5.** The pixels of this particular intermediary image 5 correspond for example to the pixels of the raw image corresponding to the centre of each microlens 201 to 2n: pixel 501 is the pixel of the raw image 2 corresponding to the centre of the microlens 201, pixel 502 is the pixel of the raw image 2 corresponding to the centre of the microlens 202, pixel 503 is the pixel of the raw image 2 corresponding to the centre of the microlens 203, pixel 511 is the pixel of the raw image 2 corresponding to the centre of the microlens 211, pixel 521 is the pixel of the raw image 2 corresponding to the centre of the microlens 221, pixel 522 is the pixel of the raw image 2 corresponding to the centre of the microlens 222, etc. The color components associated with the pixels 501 to 522 of the intermediary image 5 correspond respectively to the color components associated with the pixels of the raw image 2 corresponding to the centers of the microlenses. Pixels 50, 51, 52, 53 and 54 with no color information (illustrated in white on figure 5) are added to the intermediary image 5. These "white" pixels 50 to 54 are added due to the quincunx arrangement of the microlenses 201 to 2n. Indeed, as the microlenses are arranged in a quincunx manner, their respective centers are not aligned in column fashion. For example, the column to which belongs the centre of the microlens 211 is located between the columns to which belong the centers of the microlenses 201, 202. As to generate the matrix of pixels forming the intermediary image 5, a pixel 50 without any color information is added between the pixels 501 and 502, this pixel 50 belonging to the line of the matrix comprising the pixels 501 and 502 and to the column of the matrix comprising the pixel 511. In a same manner, a pixel 52 with no color component is added to form the intermediary image, the pixel 52 belonging to the same line as the pixel 511 and to the same column as the pixels 501 and 521. Naturally, the arrangement of pixels illustrated on figure 5 as of the need to add pixels with no color component depends from the arrangement of the microlenses. For example, in the case where the microlenses have a square form, they can be regularly arranged with regard to the photosensors array, the pixels selected in each set of pixels associated with a different microlens being then perfectly aligned with each other in the intermediary image.

Then during a step 33, one, several or all the intermediary images resulting from the previous step 32 is or are demosaiced in order to obtain a full color information for each pixel. The demosaicing step aims at recovering the missing color components for each pixel of an intermediary image as to construct a full color final image, called first final image, of the scene according to a particular point of view. For example, pixels 501 and 502 of the intermediary image 5 of figure 5 are assigned the color component 'Green', pixel 511 is assigned the color component 'Red' and pixel 521 the color component 'Blue'. The demosaicing step aims at assigning the color components 'Red' and 'Blue' to the pixels 501 and 502, the color components 'Green' and 'Blue' to the pixel 511 and the color components 'Red' and 'Green' to the pixel 521 and so on. Any color interpolation algorithm known by the skilled person in the art may be used to complete the color information to be associated with each pixel of the intermediary image 5 to obtain a first final image.

In a first step of the interpolation process, the pixels 50 to 54 having no color information are assigned a color information. This may be obtained by using for example the nearest neighbor replication method for which each interpolated output pixel 50 to 54 is assigned the value of the nearest pixel in the input image. Pixel 50 may be assigned the color component value associated with pixel 501 for example, pixel 51 the color component value associated with pixel 502, pixel 53 the color component value associated with pixel 53, pixel 54 the color component value associated with pixel 521, etc. According to a variant, the color information to be assigned to pixels 50 to 54 is obtained by using bilinear interpolation. According to this variant, the color information to be assigned to one interpolated output pixel 50 to 54 may correspond to the average of the color information of the pixels surrounding the interpolated output pixel in the line comprising the interpolated output pixel if the pixels surrounding the interpolated output pixel 50 to 54 are associated with the same color component. For example the color information to be assigned to pixel 50 corresponds to the average of the color component values associated with pixels 501 and 502 surrounding the pixel 50, as the color component associated with pixel 501 is the same as the color component associated with pixel 502 (for example the Green color component). Naturally, other interpolation algorithms may be used to fill the "empty" pixels 50 to 54, i.e. pixels with no color information or different interpolation algorithm may be used to fill the "empty" pixels, for example according to the neighborhood of the "empty" pixels.

In a second step, once all "empty" pixels of the intermediary image 5 have received a color information corresponding to one single color component value, the single color component (R, G or B in the RGB color space) associated with each pixel of the intermediary image is completed with the complementary color components of the color space (i.e. R and G if B is the single color component associated with the pixel, R and B if G is the single color component associated with the pixel, B and G if R is the single color component associated with the pixel, in the RGB color space). To that aim, any interpolation algorithm known by the skilled person in the art may be implemented. For example, the nearest neighbor replication method may be used, wherein for each missing color component, the nearest neighbor pixels having one of the missing color component are selected and their associated color component values are copied to be assigned to the pixel to be completed. Considering that the pixel 511 is the pixel to be completed with the missing color components, pixel 511 being associated with only the Red color component, pixel 501 (having the Green color component) and pixel 521 (having the Blue color component) are selected and their respective color component values are assigned to the pixel 511. According to a variant, the bilinear interpolation algorithm is used for completing pixels with missing color components. As an example, the Green color component value to be assigned to pixel 511 may be obtained by averaging the Green color component values associated with pixels 501 and 502 and the Blue color component value to be assigned to pixel 511 may be obtained by averaging the Blue color component values associated with pixels 521 and 522. Naturally, other interpolation algorithms may be used to complete the missing color components of the pixels of the intermediary image different interpolation algorithm may be used to complete the missing color components for pixels of a same intermediary image.

According to a variant, the missing color components to be associated with pixels of the intermediary image having one single associated color component are determined before filling the "empty" pixels 50 to 54. Once the pixels 501 to 522 have full color information (i.e. one value for each color component of the color space), color information to be associated with "empty" pixels is determined by interpolating the color information associated with one or several pixels of the neighborhood of the "empty" pixels 50 to 54. According to this variant, the second step of the interpolation process described hereinabove is performed before the first step of the interpolation process described hereinabove.

As the interpolation process for completing the missing color information for a given pixel is based on pixels belonging to the same image (i.e. to the same view, according to the same point of view), inter-view crosstalk artifacts are avoided.

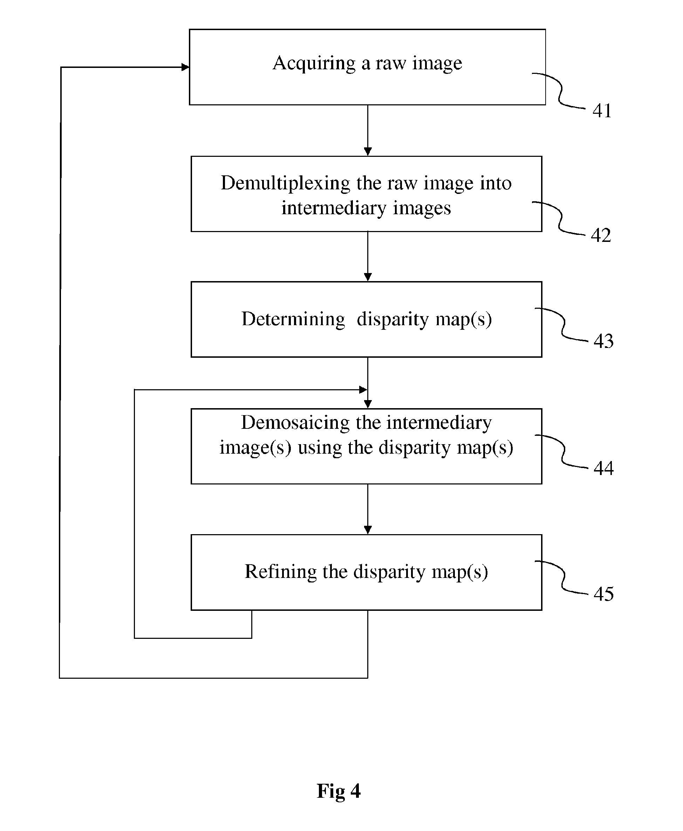

**Figure 4** illustrates a method of processing the raw image 2, according to a second particular and non-limitative embodiment of the invention.

The steps of acquiring 41 a raw image and of demultiplexing 42 the raw image into intermediary images are identical to respectively the steps 31 and 32 previously described with regard to figure 3 and are thus not detailed again here.

Then during a step 43, a first disparity map is computed and then associated with at least one of the intermediary images obtained from the demultiplexing of the raw image at step 42. The first disparity map associated with the first intermediary image comprises one disparity value associated with each pixel of the first intermediary image. The disparity value associated with one given pixel of the first intermediary image corresponds to the horizontal difference (expressed with a number of pixel(s)) between the given pixel of the first intermediary image (which corresponds to a view of the scene according to a first point of view) and a pixel of another first intermediary image (which corresponds to another view of the same scene according to a second point of view different from the first point of view) corresponding to the given pixel, two corresponding pixels (one in the first intermediary image and another one in the another first intermediary image) representing the same element of the scene, but according to two different points of view. The disparity value to be associated with the given pixel may be determined according to any method known by the skilled person in the art. As an example, the disparity value is computed by comparing two different first intermediary images of the scene (both resulting from the demultiplexing of the raw image), i.e. by matching the given pixel of the first intermediary image with the corresponding pixel of the another first intermediary image (i.e. by finding the pixel in the another first intermediary image having the same associated color component with the same value, but for a level error).

According to a variant, the disparity values to be associated with the pixels of the first intermediary image are computed by implementing SSD (Sum of Squared Difference) minimization algorithm. The cost function at x of the SSD minimization algorithm is adapted as follow:

$$C_x(d) = \frac{\sum_{y \in B_x} [I_1(y) - I_2(y+d)]^2 W_x(y) X_d(y)}{\sum_{y \in B_x} W_x(y) X_d(y)} \qquad \text{equation 1}$$

where $I_1$ and $I_2$ are two different first intermediary images, d is the disparity associated with a pixel x, $B_x$ is a block of pixels centered on x, y represents another pixel of the block $B_x$ different from pixel x, $W_x$ is a window function (e.g. a Gaussian) centered at x and X is a characteristic function that only takes into account pixels of the same color component ($X_d(y) = 1$ if the available color at pixel y and y+d are the same, and $X_d(y) = 0$ otherwise).

To obtain the disparity d to be associated with a given pixel from the equation 1, multiple values of d (called candidate disparity information) are tested and the value of d for which $C_x(d)$ is minimum is the disparity value d to be associated with the given pixel. The tested candidate disparity information is advantageously comprised between a minimal disparity value and a maximum disparity value, which are both dependent from the plenoptic camera used for acquiring the scene, i.e. the minimal disparity value and the maximum disparity value are fixed by the plenoptic camera. The number of tested candidate disparity information d is for example equal to 44, 36 or 28. The number of tested candidate disparity information depends for example from the disparity range (between the minimal and maximal disparity values) R of the plenoptic camera, being for example [-5; 5], [-4; 4] or [-3; 3] (the number of tested candidate disparity values is for example 4*R).

According to another variant, other disparity estimators such as ZSSD (Zero-mean Sum of Squared Difference) or NCC (Normalized Cross Correlation) are used and adapted as the SSD minimization algorithm for determining the disparity at pixels of the first intermediary image(s).

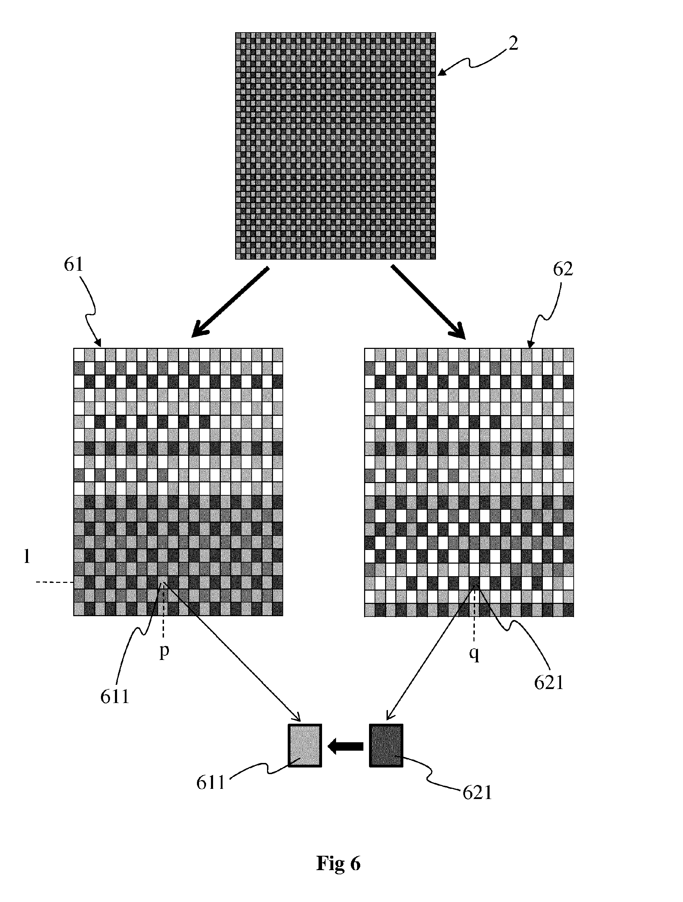

Then during a step 44, the first intermediary image(s) is (are) demosaiced by using the first disparity map(s) associated with it (them) to generate full-color image(s), called first final image(s) and corresponding to image(s) corresponding to the intermediary images but with complete color information for all the pixels comprised in this (these) first final image(s). The demosaicing step will be described with regard to one given first pixel of one first intermediary image but it is naturally understood that the described process may be applied to all first pixels (or part of them) of one or several or all first intermediary images. Based on the disparity value associated with the first pixel, one or several second pixel(s) is (are) retrieved in respectively one or several other intermediary images (different from the first intermediary image the first pixel belongs to, this or these other intermediary images being called second intermediary image(s) in the rest of the description). The second pixel(s) are the pixels corresponding to the first pixels in the second intermediary images, i.e. the first and second pixels all represent the same element of the scene shot with the plenoptic camera, but according to different points of view. If x is the abscissa of the first pixel in the first intermediary image and $d_1$ the disparity value associated with the first pixel, the abscissa, then the abscissa of the second pixels in the second intermediary images is $x \pm k.d_1$, where k is an integer positive or negative different from zero, the first and second pixels belonging to the same line in the first and the second intermediary images, the abscissa of the first and second pixels corresponding to the column number they belong to (the first and second intermediary images corresponding to matrices of pixels, the upper left pixel belonging to the line number equal to zero and to the column number equal to zero). Once the second pixels have been determined, the color component(s) associated with it (them) is determined and each color component associated with a second pixel and different from the color component already associated with the first pixel (coming from the raw image) is associated with the first pixel in addition to the color component coming from the raw image. Selecting the color component associated with second pixel representing the same element than the first pixel enables to complete the color information associated with the first pixel without introducing interview crosstalk artifacts (as the first and second pixels represent one and a same element of the scene) and provides a better result than interpolating the pixels belonging to the neighborhood of the first pixel in the first intermediary image. Such a process is illustrated on **figure 6,** according to a particular and non-limitative embodiment of the invention. Figure 6 shows one first intermediary image 61 and one second intermediary image 62 resulting from the demultiplexing of the raw image 2. As an example, the first pixel 611 belongs to line I in the first intermediary image 61 and to the column number p. The second pixels 621 belong in the second intermediary image 62 to the same line I as the first pixel 611 but to the column number q. The second pixel 621 is the pixel corresponding to the first pixel 611 in the second intermediary image. If d is the disparity value associated with the first pixel, we have q = p+d. According to the example of figure 6, the single color component associated with the first pixel and resulting from the raw image 2 is 'Green' and the single color component associated with the first pixel and resulting from the raw image 2 is 'Red'. As the single color component associated with the second pixel 621 is different from the single color component associated with the first pixel 611, this 'Red' color component is selected to complete the color information of the first pixel 611, i.e. the value representing the level of the 'Red' color component is assigned to the first pixel. For retrieving the missing 'Green' color component, another second pixel is advantageously tested in another second intermediary image (for example the second intermediary image representing the newt view on the left with regard to the first intermediary image 61, the column number r of this other second pixel being in this case r = p - d). If the single color component of this other second pixel is actually 'Green', then the value representing the level of this 'Green' color component is selected and assigned to the first pixel 611. If the color component associated with this other second pixel, then another second pixel is tested to retrieve a 'Green' component value to be assigned to the first pixel.

According to a variant, all second pixels corresponding to the first pixel in all second intermediary images are determined by using the disparity value associated with the first pixel. Then all values representing the level of the color components different from the single color component already associated with the first pixel (resulting from the raw image) are selected and the value of each missing color component corresponds to the average of the values of this missing color component retrieved from the second pixels having this missing color component associated with them.

According to a further variant, the association of the missing color component(s) with the first pixel is performed only if a confidence level/index associated with the disparity information associated with the first pixel is greater than a predetermined threshold value. The confidence level depends for example from the quality of the cost function (the quality depending from the noise level, from the number of minima in the cost function (a cost function with a single minimum has a better quality than a cost function with several minima), depending from the minimum itself, i.e. if the minimum is clearly marked, etc.).

Then during an optional step 45, the first disparity map is refined to obtain a refined disparity map, called second disparity map to be associated with the first final image. The disparity values comprised in the first disparity map are advantageously recomputed by taking into account the full color information associated with the pixels of at least two different first final images. With regard to the first and second intermediary images, the first final images have the advantage of having no pixel without associated color information and the color information associated with the pixels of the first final images are more complete as they integrate each color component of the color space (for example RGB color space). The first final image may then be advantageously recomputed by taking into account the result of the refinement of the first disparity map as the disparity information comprised in the second disparity map is more precise with regard to the first disparity map and disparity information of the second disparity map may be associated with each and every pixel of the first final image.

The refinement of the second disparity map and of the second final image(s) are advantageously repeated till convergence of the disparity values and/or of the color information (i.e. the values of the level of each color component of the color space) associated with the pixels of the second final image(s). Convergence is for example considered as being obtained when the difference between the value obtained at step n and the value obtained at step n-1 (step previous step n) is minimal, i.e. the difference is less than a threshold value for example equal to ½ or ¼ pixel.

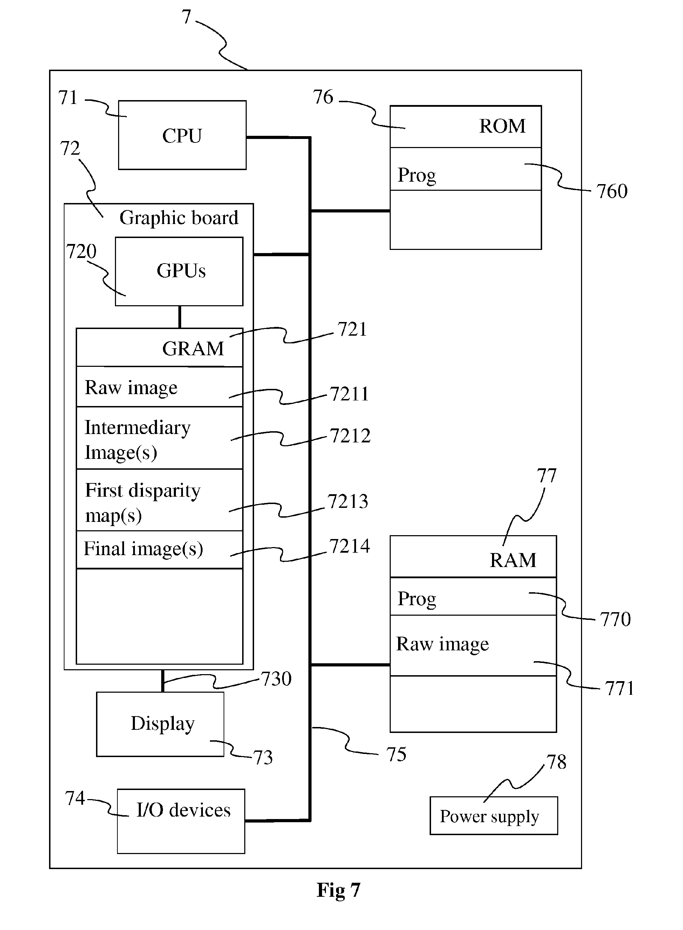

**Figure 7** diagrammatically shows a hardware embodiment of a circuit or device 7 configured for processing a raw image acquired with a plenoptic camera. The raw image is advantageously received by the device/circuit 7, the transfer of the raw image being performed wirelessly, via a wire connection or via any support like a memory (for example of the flash type). The device 7 is also configured for the creation of display signals of one or several final images representative of the scene acquired with the plenoptic camera according to different points of view. The device 7 is for example integrated into the plenoptic camera or deported in a personal computer (PC), a laptop, a tablet, a Smartphone or a games console.

The device 7 comprises the following elements, connected to each other by a bus 75 of addresses and data that also transports a clock signal:

- a microprocessor 71 (or CPU),
- a graphics card 72 comprising:

  • several Graphical Processor Units (or GPUs) 720,
  • a Graphical Random Access Memory (GRAM) 721,

- a non-volatile memory of ROM (Read Only Memory) type 76,
- a Random Access Memory or RAM 77,
- one or several I/O (Input/output) devices 74 such as for example a keyboard, a mouse, a webcam, and
- a power source 78.

The device 7 also comprises a display device 73 of display screen type directly connected to the graphics card 72 to display synthesized final images calculated and composed in the graphics card, for example live. The use of a dedicated bus to connect the display device 73 to the graphics card 72 offers the advantage of having much greater data transmission bitrates and thus reducing the latency time for the displaying of images composed by the graphics card. According to a variant, a display device is external to the device 7 and is connected to the device 7 by a cable or wirelessly for transmitting the display signals. The device 7, for example the graphics card 72, comprises an interface for transmission or connection (not shown in figure 7) adapted to transmit a display signal to an external display means such as for example an LCD or plasma screen or a video-projector.

It is noted that the word "register" used in the description of memories 721, 76 and 77 designates in each of the memories mentioned, both a memory zone of low capacity (some binary data) as well as a memory zone of large capacity (enabling a whole program to be stored or all or part of the data representative of data calculated or to be displayed).

When switched-on, the microprocessor 71 loads and executes the instructions of the program contained in the RAM 77.

The random access memory 77 notably comprises:

- in a register 770, the operating program of the microprocessor 71 responsible for switching on the device 7,
- parameters 771 representative of the scene (for example the single color component value associated with the pixels of the raw image.).

The algorithms implementing the steps of the method specific to the invention and described hereafter are stored in the memory GRAM 721 of the graphics card 72 associated with the device 7 implementing these steps. When switched on and once the parameters 771 representative of the environment are loaded into the RAM 77, the graphic processors 720 of the graphics card 72 load these parameters into the GRAM 721 and execute the instructions of these algorithms in the form of microprograms of "shader" type using HLSL (High Level Shader Language) language or GLSL (OpenGL Shading Language) for example.

The random access memory GRAM 421 notably comprises:

- in a register 7211, the parameters representative of the scene,
- in a register 7212, the parameters representative of the intermediary images (e.g. the color information associated with the pixels of the intermediary images),
- in a register 7213, the parameters representative of the disparity map (first and/or second) (e.g. the disparity values associated with the pixel of the intermediary and/or final images);

- in a register 7214, the parameters representative of the final images (e.g. the color information associated with the pixels of the final images).

According to another variant, a part of the RAM 77 is assigned by the CPU 71 for storage of the identifiers and the distances if the memory storage space available in GRAM 721 is insufficient. This variant however causes greater latency time in the composition of an image comprising a representation of the environment composed from microprograms contained in the GPUs as the data must be transmitted from the graphics card to the random access memory 77 passing by the bus 75 for which the transmission capacities are generally inferior to those available in the graphics card for transmission of data from the GPUs to the GRAM and vice-versa.

According to another variant, the power supply 78 is external to the device 7.

Naturally, the invention is not limited to the embodiments previously described.

In particular, the invention is not limited to a method of processing a raw image acquired with a plenoptic camera but also extends to any device or circuit implementing this method and notably any devices comprising at least one GPU. The implementation of calculations necessary to the demultiplexing and the demosaicing is not limited either to an implementation in shader type microprograms but also extends to an implementation in any program type, for example programs that can be executed by a CPU type microprocessor or any processing unit taking for example the form of a programmable logical circuit of type FPGA (Field-Programmable Gate Array), an ASIC (Application-Specific Integrated Circuit) or a DSP (Digital Signal Processor).

The color space used for displaying the images is not limited to the RGB color space but also extends to any other color space, for example the CYYM, CYCM or RGBW color spaces.

The use of the invention is not limited to a live utilisation but also extends to any other utilisation, for example for processing known as postproduction processing in a recording studio for the display of synthesized images for example.

The invention also relates to a method (and a device configured) for computing depth map(s) associated with different views of a scene acquired with a plenoptic camera. The invention further relates to a method and device for encoding the disparity information associated with the pixels of the images resulting from the demultiplexing and the demosaicing of the raw image.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphone, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. Method of processing a raw image (2) acquired with a plenoptic camera (1) comprising a photosensor array (13) optically associated with a lenslet array (11), the raw image (2) representing a scene, **characterized in that** the method comprises the steps of:

    - demultiplexing (32) said raw image (2) to obtain a plurality of intermediary images (61, 62) each representing a view of said scene according to a different point of view,
    - demosaicing (33) at least one first intermediary image (61) of said plurality of intermediary images to obtain at least one first final image of said scene,

    the demultiplexing (32) being performed before the demosaicing (33).

2. Method according to claim 1, wherein the raw image (2) is formed with a matrix of pixels (5), a plurality of color components being associated with the pixels of the raw image in such a way that each single color component of the plurality of color components is associated with a different first pixel of the raw image according to a predetermined pattern, each intermediary image (61, 62) comprising pixels selected among the pixels of the raw image (2).

3. Method according to claim 2, wherein, for at least one first pixel (611) of said at least one first intermediary image (61), the demosaicing comprises the steps of:

    - determining at least one second pixel (621), in at least one second intermediary image (62) of the plurality of intermediary images different from the at least one first intermediary image (61), corresponding to said at least one first pixel (611), based on disparity information associated with said at least one first pixel (611),
    - determining the color component associated with said at least one second pixel (621),
    - if the color component associated with said at least one second pixel (621) is different from the color component associated with said at least one first pixel (611), then further associating the color component associated with said at least one second pixel (621) with said at least one first pixel (611).

4. Method according to claim 3, wherein the associating of the color component with said at least one first pixel (611) is performed only if a confidence level associated with said disparity information associated with said at least one first pixel (611) is greater than a predetermined threshold value.

5. Method according to any one of claims 1 to 4, wherein the method further comprises computing (43) a first disparity map associated with said at least one first intermediary image (61).

6. Method according to claim 5, wherein the method further comprises refining (45) said first disparity map to obtain a second disparity map to be associated with said at least one first final image, the refining being based on color information associated with pixels of the at least one first final image.

7. Method according to claim 6, wherein the method further comprises refining said at least one first final image to obtain at least one second final image, the refining being based on disparity information comprised in said second disparity map.

8. Method according to claims 6 and 7, wherein the method further comprises refining said second disparity map and refining said second final image, the refining of the second disparity map and of the second final image are repeated until convergence.

9.  Device (7) configured for processing a raw image acquired with a plenoptic camera comprising a photosensor array optically associated with a lenslet array, the first image representing a scene, **characterized in that** the device comprises at least one processor (720) configured for:

    - demultiplexing said raw image to obtain a plurality of intermediary images each representing a view of said scene according to a different point of view,
    - demosaicing at least one first intermediary image of said plurality of intermediary images to obtain at least one first final image of said scene,

    the demultiplexing being performed before the demosaicing.

10. Device according to claim 9, wherein the at least one processor (720) is further configured for, for at least one first pixel of said at least one first intermediary image:

    - determining at least one second pixel, in at least one second intermediary image of the plurality of intermediary images different from the at least one first intermediary image, corresponding to said at least one first pixel based on disparity information associated with said at least one first pixel,
    - determining the color component associated with said at least one second pixel,
    - if the color component associated with said at least one second pixel is different from the color component associated with said at least one first pixel, then further associating the color component associated with said at least one second pixel with said at least one first pixel.

11. Device according to claim 10, wherein the at least one processor (720) is further configured for determining a confidence level associated with the disparity information associated with said at least one first pixel.

12. Device according to any one of claims 8 to 11, wherein the at least one processor (720) is further configured for computing a first disparity map associated with said at least one first intermediary image.

13. Device according to claim 12, wherein the at least one processor (720) is further configured for refining said first disparity map to obtain a second disparity map to be associated with said at least one first final image, the refining being based on color information associated with pixels of the at least one first final image.

14. Device according to claim 13, wherein the at least one processor (720) is further configured for refining said at least one first final image to obtain at least one second final image, the refining being based on disparity information comprised in said second disparity map.

15. Computer program product, **characterized in that** it comprises instructions of program code for executing steps of the method according to one of claims 1 to 8, when said program is executed on a computing device.

Fig 1

**Fig 2**

Acquiring a raw image

31

Demultiplexing the raw image into
intermediary images

32

Demosaicing the intermediary
image(s)

33

**Fig 3**

Acquiring a raw image — 41

Demultiplexing the raw image into intermediary images — 42

Determining disparity map(s) — 43

Demosaicing the intermediary image(s) using the disparity map(s) — 44

Refining the disparity map(s) — 45

**Fig 4**

**Fig 5**

Fig 6

7

71 CPU

72 Graphic board

720 GPUs

721 GRAM

7211 Raw image

7212 Intermediary Image(s)

7213 First disparity map(s)

7214 Final image(s)

730 Display

73 Display

74 I/O devices

76 ROM

760 Prog

77 RAM

770 Prog

771 Raw image

75

78 Power supply

**Fig 7**

Europäisches
Patentamt

European
Patent Office

Office européen
des brevets

# EUROPEAN SEARCH REPORT

**Application Number**

EP 13 30 6635

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 475 162 A2 (SONY CORP [JP]) 11 July 2012 (2012-07-11) | 1,2,5,9, 12,15 | INV. H04N5/232 |
| Y | * paragraphs [0002], [0007], [0020], [0026] - [0028], [0038]; figure 3 * * paragraphs [0042] - [0045]; figure 13 * ----- | 3,4,6-8, 10,11, 13,14 | G06T5/50 H04N13/02 G02B27/22 H04N13/00 |
| Y | EP 2 202 682 A1 (NIPPON TELEGRAPH & TELEPHONE [JP]) 30 June 2010 (2010-06-30) * paragraphs [0013], [0019] - [0023]; figures 1-2 * ----- | 3,4,6-8, 10,11, 13,14 | |
| Y | HACHEM HALAWANA ET AL: "Color Stereo Matching Cost Applied to CFA Images", 6 March 2009 (2009-03-06), COMPUTATIONAL COLOR IMAGING, SPRINGER BERLIN HEIDELBERG, BERLIN, HEIDELBERG, PAGE(S) 170 - 179, XP019125014, ISBN: 978-3-642-03264-6 pages 170-179, * section 3; pages 175-176; figure 5 * ----- | 3,6-8, 10,13,14 | |

**TECHNICAL FIELDS SEARCHED (IPC)**

H04N
G06T
G02B

The present search report has been drawn up for all claims

| Place of search | Date of completion of the search | Examiner |
|---|---|---|
| The Hague | 6 February 2014 | Daribo, Ismael |

## ANNEX TO THE EUROPEAN SEARCH REPORT
## ON EUROPEAN PATENT APPLICATION NO.

EP 13 30 6635

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2014

| Patent document cited in search report | | Publication date | Patent family member(s) | | | Publication date |
|---|---|---|---|---|---|---|
| EP 2475162 | A2 | 11-07-2012 | CN | 102595170 | A | 18-07-2012 |
| | | | EP | 2475162 | A2 | 11-07-2012 |
| | | | JP | 2012147046 | A | 02-08-2012 |
| | | | US | 2012176506 | A1 | 12-07-2012 |
| EP 2202682 | A1 | 30-06-2010 | CA | 2701890 | A1 | 23-04-2009 |
| | | | CN | 101821768 | A | 01-09-2010 |
| | | | EP | 2202682 | A1 | 30-06-2010 |
| | | | JP | 4578567 | B2 | 10-11-2010 |
| | | | JP | 2011028760 | A | 10-02-2011 |
| | | | KR | 20100051744 | A | 17-05-2010 |
| | | | RU | 2010113344 | A | 27-11-2011 |
| | | | TW | 200926061 | A | 16-06-2009 |
| | | | US | 2010208991 | A1 | 19-08-2010 |
| | | | WO | 2009051064 | A1 | 23-04-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LI ; GUNTURK ; ZHANG.** Image demosaicing: a systematic survey. *Proc. SPIE,* 2008, vol. 6822, 68221J